# FASCICULE DE BREVET EUROPEEN

(11) **EP 2 402 869 B1**
(45) Date de publication et mention de la délivrance du brevet: **25.01.2017**
(21) Numéro de dépôt: 11161031.7
(22) Date de dépôt: 04.04.2011
(51) Int. Cl.: G06F 17/30

(54) **Accès à un système de fichiers avec indexation sémantique**
Zugriff auf ein Dateiensystem mit semantischer Indexierung
Access to a file system with semantic indexing

(30) Priorité: 30.06.2010 FR 1002766
(43) Date de publication de la demande: 04.01.2012
(73) Titulaire: ALCATEL LUCENT, 92100 Boulogne-Billancourt (FR)
(72) Inventeur: Maag, Maria Coralia Laura, 91620 Nozay (FR); Hacid, Hakim, 91620 Nozay (FR)
(74) Mandataire: Berthier, Karine

(56) Documents cités:
- EP-A1- 1 109 092
- WO-A2-2007/023179
- US-A1- 2003 131 016
- US-A1- 2004 230 599
- BAO XINLONG ET AL: "Fewer clicks and less frustration: Reducing the cost of reaching the right folder", 2006 INTERNATIONAL CONFERENCE ON INTELLIGENT USER INTERFACES. IUI 06. SYDNEY, AUSTRALIA, JAN. 29 - FEB. 1, 2006; [ANNUAL INTERNATIONAL CONFERENCE ON INTELLIGENT USER INTERFACES], NEW YORK, NY : ACM, US, 29 January 2006 (2006-01-29), pages 178-185, XP002431119, DOI: 10.1145/1111449.1111490 ISBN: 978-1-59593-287-7

## Description

La présente invention concerne les systèmes de traitement de l'information disposant d'une interface homme-machine permettant à un utilisateur d'interagir avec des applications fonctionnant sur celui-ci.

Ces système de traitement de l'information peuvent être des micro-ordinateurs, fixes ou portables, des terminaux de communication, des assistants personnels numériques (ou PDA pour *Personal Digital Assistant* en langue anglaise)... ou tout autre équipement doté d'une interface homme-machine permettant de manipuler des fichiers.

Le système peut posséder localement un système de fichiers qui peuvent être mémorisées sur un disque dur ou dans une mémoire vive. Le système de fichier peut également être accessible via un réseau de communication, local ou non.

Ces fichiers sont classiquement organisés selon une arborescence de répertoires. Chaque fichier est localisé à une position au sein de l'arborescence. Chaque répertoire peut donc comporter des fichiers et des répertoires.

Le système de traitement de l'information dispose d'une couche logicielle d'exploitation permettant de mettre en oeuvre des applications et mettant à disposition de celles-ci différents services basiques dont une interface homme-machine dont un élément permet l'accès au système de fichiers. Cette interface homme-machine est généralement graphique et l'élément en question se présente habituellement sous la forme d'une fenêtre graphique comportant différents moyens pour naviguer au sein de l'arborescence des répertoires.

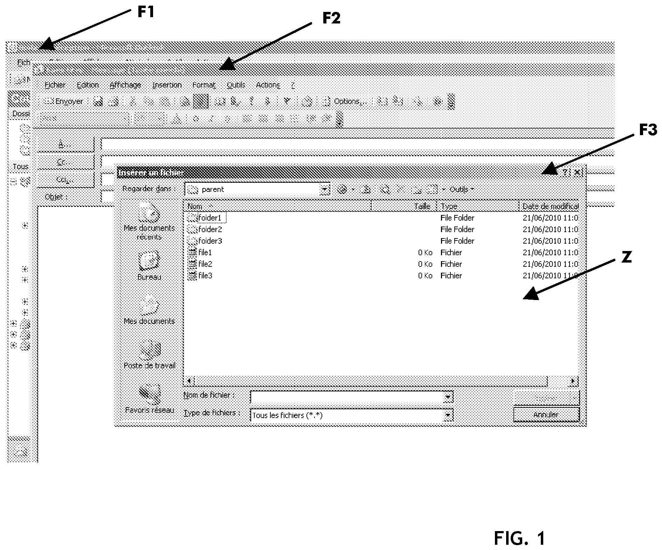

La figure 1 illustre une telle interface homme-machine. Les fenêtres F1 et F2 correspondent à une application. Lorsque l'utilisateur de cette application souhaite accéder au système de fichiers, une nouvelle fenêtre F3 s'affiche. Elle présente différents moyens (boutons, listes déroulantes...) permettant la navigation dans l'arborescence de répertoire dont une vue de la position courante est représentée dans la zone Z. Cette zone Z peut montrer à la fois des fichiers « filel », « file2 », »file3 » et des répertoires « folder1 », « folder2 », « folder3 »,

A l'affichage de la fenêtre F3, la zone Z montre la vue de la position initiale et l'utilisateur peut naviguer jusqu'à une position finale, par exemple pour sélectionner un fichier ou pour sauvegarder un document ouvert dans l'application.

Toutefois, la position initiale est généralement la dernière position ouverte par l'application ou par la couche logicielle d'exploitation. Parfois, il peut s'agit aussi d'une position déterminée par l'application par paramétrage.

L'utilisateur doit donc presque systématiquement naviguer jusqu'à la position désirée.

Lorsqu'il doit manipuler régulièrement des fichiers, ces navigations incessantes deviennent une perte de temps et source d'une dégradation de l'ergonomie de l'interface homme-machine.

Le but de l'invention est de permettre à l'utilisateur de gagner du temps et d'améliorer l'ergonomie des accès aux fichiers

Pour ce faire, l'invention a pour premier objet, un procédé pour permettre à l'utilisateur d'une application fonctionnant sur un système de traitement de l'information d'accéder à un ensemble de fichiers organisés selon une arborescence de répertoires, au moyen d'un élément d'une interface homme-machine comportant des moyens de navigation au sein de ladite arborescence à partir d'une position initiale jusqu'à une position finale, dans lequel ladite position initiale est déterminée en fonction d'une corrélation entre des premières informations sémantiques fournies par l'application et des secondes informations sémantiques associées aux répertoires.

Ainsi, le procédé selon l'invention permet de proposer à l'utilisateur une position initiale des moyens de navigation qui soit meilleure que celle proposée dans l'état de la technique, par la mise en corrélation d'informations sémantiques fournies par l'application utilisée et par l'arborescence des fichiers.

Selon une mise en oeuvre de l'invention la position initiale maximise ladite corrélation.

Les secondes informations sémantiques peuvent être déterminées dans une étape préalable d'analyse de l'arborescence de répertoires. Cette étape préalable peut être déclenchée de façon périodique ou par une modification au sein de l'arborescence.

Les secondes informations peuvent associer des mots-clés et des poids, et éventuellement aussi des types de fichiers.

L'invention a également pour objet un procédé de sauvegarde d'un document ouvert au sein de ladite application consistant à utiliser le procédé précédemment décrit, à choisir un nom de fichier et à sauvegarder ledit document ouvert à la position finale déterminée par le procédé en question.

Les premières informations sémantiques peuvent être déterminées par une analyse du contenu du document.

L'invention a pour autre objet un procédé d'insertion d'un fichier attaché au sein d'un courrier électronique consistant à utiliser le procédé précédemment décrit et à choisir un fichier parmi ceux présent à la position finale ainsi déterminée.

Les premières informations sémantiques peuvent être déterminées par une analyse du contenu dudit courrier électronique.

L'invention a pour encore autres objets un dispositif de traitement de l'information mettant en oeuvre l'un de ces procédés, une interface homme-machine disposant des moyens adaptés pour les mettre en oeuvre et un logiciel comportant des moyens pour, lorsque mis en oeuvre sur un dispositif de traitement de l'information, réaliser l'un de ces procédés.

L'invention, ses avantages et ses caractéristiques apparaîtra de façon plus claire dans la description qui va suivre en liaison avec les figures annexées.
La figure 1, déjà commentée, présente une interface homme-machine selon l'état de la technique.
La figure 2 illustre une interface homme-machine mettant en oeuvre l'invention.
La figure 3 schématise un exemple d'arborescence de répertoires, comportant des fichiers de différents types.

L'invention peut s'appliquer à toute sorte d'applications logicielle fonctionnant sur un système de traitement de l'information.

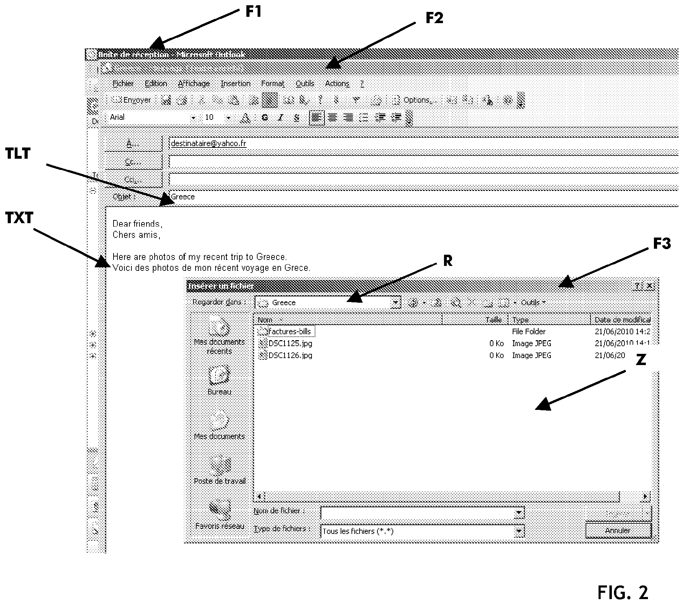

La figure 2 illustre une mise en oeuvre avec un outil de gestion de courriers électroniques. Il peut notamment s'agir d'un outil tel le produit logiciel « Outlook » commercialisé par la société Microsoft.

La fenêtre F1 figure la fenêtre principale de l'application ; la fenêtre F2 est celle permettant l'écriture d'un courrier électronique. Elle comporte un menu et des barres d'outils permettant l'accès aux fonctions de l'application, ainsi qu'une zone permettant la saisie des principaux paramètres du courrier électronique (Destinataire, expéditeur, titre TLT..) et une zone de texte TXT contenant le corps du courrier.

Un tel outil peut permettre l'insertion d'un fichier attaché au sein d'un courrier électronique. Une nouvelle fenêtre F3 s'ouvre pour permettre l'accès aux fichiers. Ces fichiers sont organisés selon une arborescence de répertoire. Le champ R présente le répertoire courant et la zone Z présente le contenu de ce répertoire. Ce contenu est formé ici de deux fichiers « DSC1125.jpg» et « DSC1126.jpg » qui sont deux photographies au format JPEG, et un répertoire « factures-bills ».

Le répertoire courant est une position au sein de l'arborescence des répertoires. Dans cet exemple, l'arborescence peut être de la forme :
Racine
   Voyages
      France
      Italy
      Greece
         Factures-bills

Selon l'invention, des informations sémantiques sont associées à au moins certains répertoires.

Ces informations sémantiques peuvent être déterminées dans une étape préalable d'analyse de l'arborescence. Cette étape préalable peut être déclenchée
- de façon périodique ou
- lors d'une modification au sein de l'arborescence (création d'un nouveau fichier, déplacement d'un fichier ou d'un répertoire etc.).

Mais d'autres possibilités sont bien évidemment possibles.

Les informations sémantiques associées à un répertoire donné peuvent être déterminées en fonction du contenu de ce répertoire.

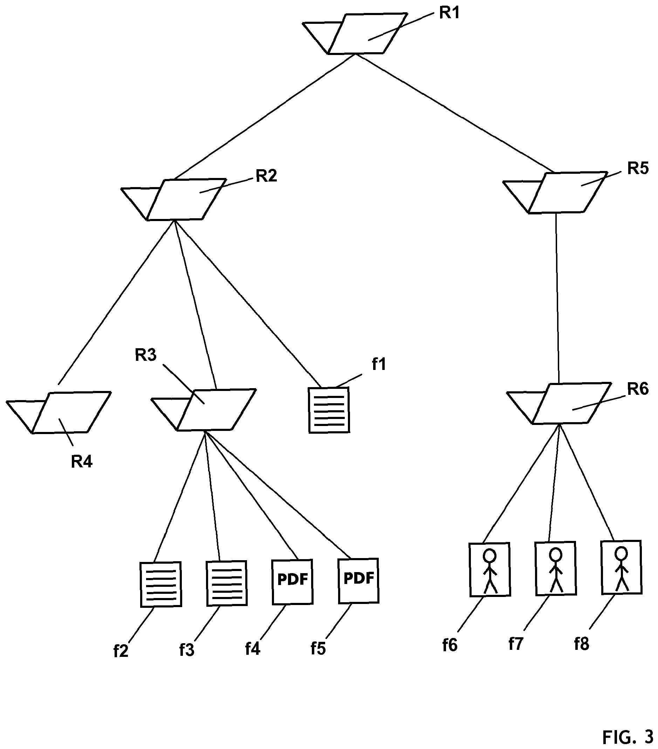

Selon un mode de réalisation, le contenu des répertoires contenus dans ce répertoire donné ne sont pas pris en compte pour la détermination des informations sémantiques. La figure 3 illustre une arborescence de répertoires et un procédé possible de détermination de ces informations sémantiques.

Les symboles R1, R2, R3, R4, R5, R6 représentent des répertoires. Les symboles f1, f2, f3, f4, f5, f6, f7, f8 représentent des fichiers de différents types. Les fichiers f1, f2, f3 représentent des fichiers issus d'un traitement de texte (par exemple l'application Word de la société Microsoft) ; les fichiers f4, f5 sont des fichiers au format PDF tels que produits par l'application Acrobat de la société Adobe ; les fichiers f6, f7, f8 sont des fichiers images, par exemple des photos, au format JPEG (pour *« Joint Photography Expert Group* »).

Les informations sémantiques du répertoire R1 sont déterminées par une analyse des fichiers contenus dans ce répertoire. Comme il n'en contient pas, aucune information sémantique n'est associée au répertoire R1.

Les informations sémantiques du répertoire R2 sont déterminées par le fichier f1.

Les informations sémantiques du répertoire R3 sont déterminées à partir de l'analyse des fichiers f2, f3, f4 et f5.

Aucune information sémantique n'est associée au répertoire R4 puisque celui-ci est vide.

Aucune information sémantique n'est associée au répertoire R5 puisque celui-ci ne contient aucun fichier mais uniquement un répertoire R6.

Les informations sémantiques du répertoire R6 sont déterminées par l'analyse des fichiers f6, f7 et f8.

Selon un mode de réalisation, ces informations sémantiques associent des mots-clés et des poids.
- contenu des textes
- tags des fichiers images
- etc.

Les poids peuvent notamment être déterminés par le nombre d'occurrence d'un mot. Plus un mot est présent et plus son poids peut être élevé. En outre la position du mot peut influer sur son poids : par exemple, une occurrence dans le nom du fichier peut davantage impacter le poids qu'une occurrence au sein du fichier.

Les informations sémantiques peuvent également associer des types de fichiers. Ces types de fichiers peuvent, en fonction des systèmes d'exploitation, être corrélés avec l'extension du nom de fichier. On peut distinguer des fichiers d'images (« .jpg », « .gif », « .png »...), des fichiers textes (« .doc », « .docx »...), des fichiers de tableurs (« .xls ») etc.

Ces informations sémantiques peuvent être stockées de différentes façons. Il est possible de disposer d'une base de données rassemblant les informations sémantiques associées à chaque position au sein de l'arborescence de fichiers. Il est également possible de stockée au sein de chaque position un petit fichier rassemblant les informations sémantiques pour celui-ci.

Lorsque l'application souhaite accéder au système de fichier, elle fournit également des informations sémantiques. Ces informations sémantiques peuvent résulter d'une analyse du contexte au moment de l'accès.

Dans l'exemple de la figure 2, ces informations sémantiques peuvent être déterminées par l'analyse des champs TLT et TXT de la fenêtre F2.

Ces champs contiennent les mots « Greece » en anglais et « Grèce » en français.

Le procédé selon l'invention met en corrélation ces informations sémantiques avec celles associées aux répertoires de l'arborescence. Préférentiellement, on cherche à maximiser la corrélation afin de fournir le meilleur résultat. Il peut toutefois être prévu de réaliser une corrélation non parfaitement optimale afin de prendre en compte d'autres contraintes (utilisation du dernier répertoire ouvert en cas d'accès très répétitifs ; minimisation du temps d'accès etc.)

Automatiquement, la position « Greece » dans l'arborescence des répertoires est déterminée comme maximisant la corrélation entre les deux sources d'informations sémantiques.

Ce répertoire « Greece » contient un sous-répertoire « factures-bills » qui contient des fichiers .xls ou .doc. Les informations sémantiques fournis par l'application contiennent également le mot-clé « photos » qui engendre une meilleur corrélation avec le répertoire « Greece » qui contient des fichiers « « .jpg » qu'avec son sous-répertoire et c'est donc la position « Greece » dans l'arborescence qui est affichée dans la fenêtre de navigation F3.

## Revendications

1. Procédé pour permettre à l'utilisateur d'une application fonctionnant sur un système de traitement de l'information d'accéder à un ensemble de fichiers organisés selon une arborescence de répertoires, au moyen d'un élément d'une interface homme-machine comportant des moyens de navigation au sein de ladite arborescence à partir d'une position initiale jusqu'à une position finale, dans lequel ladite position initiale est déterminée en fonction d'une corrélation entre des premières informations sémantiques fournies par ladite application et des secondes informations sémantiques associées auxdits répertoires,
ledit procédé étant **caractérisé en ce que** lesdites premières informations sémantiques sont constituées d'au moins un mots-clés fournis par ladite application,
et **en ce que** lesdites deuxièmes informations sémantiques sont constituées d'informations représentatives du contenu desdits répertoires.

2. Procédé selon la revendication précédente dans lequel ladite position initiale maximise ladite corrélation.

3. Procédé selon l'une des revendications précédentes, dans lequel lesdites secondes informations sémantiques sont déterminées dans une étape préalable d'analyse de ladite arborescence.

4. Procédé selon la revendication précédente dans lequel ladite étape préalable est déclenchée de façon périodique.

5. Procédé selon la revendication 3 dans lequel ladite étape préalable est déclenchée par une modification au sein de ladite arborescence.

6. Procédé selon l'une des revendications précédentes dans lequel lesdites secondes informations associent des mot-clés et des poids.

7. Procédé selon la revendication précédente dans lequel lesdites secondes informations associent des mots-clés, des poids et des types de fichiers.

8. Procédé de sauvegarde d'un document ouvert au sein de ladite application consistant à utiliser le procédé selon l'une des revendications 1 à 7, à choisir un nom de fichier et à sauvegarder ledit document ouvert à ladite position finale.

9. Procédé de sauvegarde selon la revendication précédente, dans lequel lesdites premières informations sémantiques sont déterminées par une analyse du contenu dudit document.

10. Procédé d'insertion d'un fichier attaché au sein d'un courrier électronique consistant à utiliser le procédé selon l'une des revendications 1 à 7 et à choisir un fichier parmi ceux présent à ladite position finale.

11. Procédé d'insertion selon la revendication précédente dans lequel lesdites premières informations sémantiques sont déterminées par une analyse du contenu dudit courrier électronique.

12. Dispositif de traitement de l'information mettant en oeuvre un procédé selon l'une des revendications précédentes.

13. Interface homme-machine disposant des moyens adaptés pour mettre en oeuvre un procédé selon l'une des revendications 1 à 11.

14. Logiciel comportant des moyens pour, lorsque mis en oeuvre sur un dispositif de traitement de l'information, réaliser le procédé selon l'une des revendications 1 à 11.

## Patentansprüche

1. Verfahren, um dem Benutzer einer auf einem Datenverarbeitungssystem laufenden Anwendung zu ermöglichen, gemäß einem Baumdiagramm von Verzeichnissen auf einen Satz geordneter Dateien zuzugreifen, was anhand einer Mensch-Maschine-Schnittstelle erfolgt, welche Mittel zur Navigation in besagtem Baumdiagramm ausgehend von einer Ausgangsposition bis zu einer Schlussposition umfasst, wobei besagte Ausgangsposition in Funktion einer Korrelation zwischen den ersten von besagter Anwendung zur Verfügung gestellten semantischen Informationen und zweiten, mit besagten Verzeichnissen assoziierten semantischen Informationen bestimmt wird,
wobei besagtes Verfahren **dadurch gekennzeichnet ist, dass** besagte erste semantische Informationen mindestens aus einem Stichwort bestehen, das von besagter Anwendung zur Verfügung gestellt wird,
und wobei die besagten zweiten semantischen Informationen aus Informationen bestehen, die repräsentativ für den Inhalt besagter Verzeichnisse stehen.

2. Verfahren nach vorgenanntem Anspruch, wobei besagte Ausgangsposition besagte Korrelation maximiert.

3. Verfahren nach einem der vorgenannten Ansprüche, wobei die besagten, zweiten semantischen Informationen in einer der Analyse besagten Baumdiagramms vorausgehenden Phase bestimmt werden.

4. Verfahren nach vorgenanntem Anspruch, wobei besagte vorausgehende Phase periodisch eingeleitet wird.

5. Verfahren nach Anspruch 3, wobei besagte vorausgehende Phase durch eine Modifikation in besagtem Baumdiagramm ausgelöst wird.

6. Verfahren nach einem der vorgenannten Ansprüche, wobei die besagten, zweiten Informationen Stichworte mit Bedeutungen assoziieren.

7. Verfahren nach vorgenanntem Anspruch, wobei die besagten, zweiten Informationen Stichworte, Bedeutungen und Dateitypen assoziieren.

8. Verfahren zum Speichern eines offenen Dokuments in besagter Anwendung, wobei das Verfahren in der Anwendung des Verfahrens nach einem der Ansprüche 1 bis 7 sowie weiterhin dadurch erfolgt, dass ein Dateiname gewählt und besagtes offenes Dokument in besagter Schlussposition gespeichert wird.

9. Speicherverfahren nach vorgenanntem Anspruch, wobei die besagten, ersten semantischen Informationen anhand einer Analyse des Inhalts besagten Dokuments bestimmt werden.

10. Verfahren zum Einfügen einer an eine E-Mail angefügten Datei, wobei das Verfahren in der Anwendung des Verfahrens nach einem der Ansprüche 1 bis 7 sowie weiterhin in der Auswahl einer Datei aus denjenigen Dateien umfasst, welche in besagter Schlussposition vorhanden sind.

11. Einfügungsverfahren nach vorgenanntem Anspruch, wobei die besagten, ersten semantischen Informationen anhand einer Analyse des Inhalts besagter E-Mail bestimmt werden.

12. Datenverarbeitungsvorrichtung, welche ein Verfahren nach einem der vorgenannten Ansprüche ausführt.

13. Mensch-Maschine-Schnittstelle mit Mitteln, die ausgelegt sind für das Ausführen eines Verfahrens nach einem der Ansprüche 1 bis 11.

14. Software mit Mitteln zum Ausführen des Verfahrens nach einem der Ansprüche 1 bis 11, wenn sie auf einer Datenverarbeitungsvorrichtung ausgeführt wird.

## Claims

1. A method for enabling the user of an application running on an information-processing system to access a set of files organized in a tree structure of directories, by way of an element of a human-machine interface comprising means of navigating within said tree structure from an initial position to a final position, wherein said initial position is determined based on a correlation between first semantic information provided by said application and second semantic information associated with said directories,
said method being **characterized in that** said first semantic information is constituted of at least one keyword provided by said application,
and **in that** said second semantic information is constituted of information representative of the contents of said directories.

2. A method according to the preceding claim, wherein said initial position maximizes said correlation.

3. A method according to one of the preceding claims, wherein said second semantic information is determined in a preliminary step of analyzing said tree structure.

4. A method according to the preceding claim wherein said preliminary step is triggered periodically.

5. A method according to claim 3 wherein said prior step is triggered by a change within said tree structure.

6. A method according to one of the preceding claims wherein said second information associates keywords and weights.

7. A method according to the preceding claim, wherein said second information associates keywords, weights, and file types.

8. A method for saving a document opened within said application, consisting of using the method according to one of the claims 1 to 7, of choosing a file name, and of saving said open document in said final position.

9. A method for saving according to the preceding claim, wherein said first semantic information is determined by an analysis of the contents of said document.

10. A method for inserting a file attached within an e-mail consisting of using the method according to any one of the claims 1 to 7 and of choosing a file from among those present in said final position.

11. A method for inserting according to the preceding claim, wherein said first semantic information is determined by an analysis of the contents of said e-mail.

12. An information-processing device implementing a method according to one of the preceding claims.

13. A human-machine interface having means adapted for implementing a method according to one of the claims 1 to 11.

14. Software comprising means for, when implemented on an information-processing device, carrying out the method according to one of the claims 1 to 11.
